# EUROPÄISCHE PATENTSCHRIFT

(11) **EP 2 161 429 B1**
(45) Veröffentlichungstag und Bekanntmachung des Hinweises auf die Patenterteilung: **22.02.2017**
(21) Anmeldenummer: 09011547.8
(22) Anmeldetag: 09.09.2009
(51) Int. Cl.: F02B 29/04, F02M 35/10

(54) **Ansaugmodul für einen Verbrennungsmotor**
Suction module for a combustion engine
Module d'aspiration pour un moteur à combustion

(30) Priorität: 09.09.2008 DE 102008046506; 12.09.2008 DE 102008047079
(43) Veröffentlichungstag der Anmeldung: 10.03.2010
(73) Patentinhaber: MAHLE Behr GmbH & Co. KG, 70469 Stuttgart (DE)
(72) Erfinder: Hassdenteufel, Klaus, 70839 Gerlingen (DE); Nguyen, Chi-Duc, 70619 Stuttgart (DE); Diem, Johannes, 71287 Weissach (DE); Kern, Josef, 73553 Alfdorf (DE); Edwards, Simon, 73547 Lorch (DE)
(74) Vertreter: Grauel, Andreas

(56) Entgegenhaltungen:
- EP-A1- 1 888 893
- EP-A2- 1 336 736
- EP-A2- 2 037 201
- DE-A1- 3 444 961
- DE-A1- 19 853 455
- DE-A1-102007 013 302
- FR-A1- 2 840 363
- FR-A1- 2 908 833
- JP-A- 2002 309 944
- JP-U- H0 321 522
- JP-U- 61 119 085

## Beschreibung

Die Erfindung betrifft ein Ansaugmodul für einen Verbrennungsmotor nach dem Oberbegriff des Anspruchs 1.

Es ist bekannt, ein Kühlglied zur Kühlung des einem Verbrennungsmotor zugeführten Gases in einem Ansaugmodul integriert vorzusehen. Zumeist ist die Temperatur des dem Motor zugeführten Gasstroms dabei im Normalbetrieb durch einen Verdichter wie etwa einen Abgas-Turbolader und/oder eine zugeführte Menge von rückgeführtem Abgas erhöht, so dass die Kühlung durch das Kühlglied günstigen oder gar notwendigen Einfluss auf Betrieb und Wirkungsgrad des Motors hat. Grundsätzlich kann ein solches Kühlglied alternativ oder ergänzend zu weiteren Wärmetauschern wie zum Beispiel einem an der Fahrzeugfront angeordneten, direkten Ladeluftkühler vorgesehen sein.

FR 2 908 833 A1 offenbart ein Ansaugmodul mit einem Kühler und einem Bypasskanal.

Es ist die Aufgabe der Erfindung, ein Ansaugmodul für einen Verbrennungsmotor anzugeben, bei dem eine verbesserte Kühlung bei gegebenem Bauraum erzielbar ist.

Diese Aufgabe wird für ein eingangs genanntes Ansaugmodul erfindungsgemäß mit den kennzeichnenden Merkmalen des Anspruchs 1 gelöst. Durch das Vorsehen zweier Kühlabschnitte mit dazwischen angeordnetem Umlenkbereich kann die zur Kühlung erforderliche Durchströmungstiefe des Kühlglieds auf mehrere Abschnitte verteilt werden, wodurch der Bauraum besser nutzbar ist. Weiterhin ist eine Zwischenverteilung in Querrichtung in dem Umlenkbereich gegeben, was insgesamt zu einer Homogenisierung der Gastemperatur über den Querschnitt des Plenumbereichs bei Eintritt in den Verbrennungsmotor sowie zu einer Optimierung der Kühlleistung beiträgt. Zudem kann eine bauliche Vereinfachung erzielt werden, indem zum Beispiel bei Rohr-Rippen-Bauweise die Anzahl der Rohrreihen der einzelnen Kühlerabschnitte oder der einzelnen Kühler reduziert ist.

Unter einem Ventilglied ist insbesondere eine Klappe zu verstehen. Die Klappe kann einteilig oder mehrteilig ausgebildet sein. Ferner sind unter einem Ventilglied Regelelemente zu verstehen, die zur Steuerung eines Volumenstroms geeignet sind wie beispielsweise ein Schieber oder ein Hahn oder ein Membranventil.

Zur Optimierung der Bauform und Sicherstellung einer guten Verwirbelung im Umlenkbereich ist es in bevorzugter Ausführungsform vorgesehen, dass der Gasstrom in dem Umlenkbereich um einen Winkel α umgelenkt wird. Der Winkel α beträgt insbesondere 40°≤α≤ etwa 180°. In dieser Bauform kann das Kühlglied in Verbindung mit dem Umlenkbereich auch als U-flow-Kühler betrachtet werden. Gerade für den oft begrenzten Bauraum im Motorraum insbesondere von PKW ist eine solche Anordnung ideal, um ein kompaktes Ansaugmodul seitlich eines Zylinderkopfs des Motors zu positionieren. Je nach baulichen Anforderungen kann der Umlenkbereich aber auch einen beliebigen andere Umlenkwinkel wie zum Beispiel 45°, 90° oder 120° aufweisen.

Erfindungsgemäß ist zwischen dem Eintrittsbereich und dem Plenumsbereich ein Bypasskanal ausgebildet, wobei der Bypasskanal durch ein Ventilglied einstellbar verschließbar ist. Unter einem Ventilglied ist insbesondere eine Klappe zu verstehen. Die Klappe kann einteilig oder mehrteilig ausgebildet sein. Ferner sind unter einem Ventilglied Regelelemente zu verstehen, die zur Steuerung eines Volumenstroms geeignet sind wie beispielsweise ein Schieber oder ein Hahn oder ein Membranventil.

Das Ventilglied kann in konkreter Ausformung zum Beispiel als Stellklappe ausgeformt sein oder auch als Hahn oder Ventilschieber oder Membranventil. Hierdurch kann zum Beispiel in Warmlaufphasen oder anderen Betriebszuständen eine gewünschte Umgehung des Kühlglieds erreicht werden. Insbesondere kann das Ventilglied mehrere Stellungen aufweisen, durch die eine abgestufte oder kontinuierliche Aufteilung des Gasstroms auf das Kühlglied und den Bypasskanal erzielt wird. In bevorzugter Detailgestaltung ist dabei das Ventilglied in Strömungsrichtung des Gasstroms vor dem ersten Kühler angeordnet. Ein solcher Bypasskanal kann je nach Anforderungen in beliebiger Bauform ausgebildet sein, zum Beispiel als ein in kastenartigen Gehäuse integriert ausgeformter Durchtritt oder auch als separater, schlauchartig angesetzter äußerer Umgehungskanal.

Bei einer weiteren bevorzugten Ausführungsform ist nach dem ersten Kühlerabschnitt, insbesondere nach dem ersten Kühler, ein Ventilglied angeordnet, wobei der Gasstrom durch das Kühlglied mittels des Ventilglieds einstellbar drosselbar ist. Das Ventilglied kann in konkreter Ausformung zum Beispiel als Stellklappe ausgeformt sein oder auch als Hahn oder Ventilschieber oder Membranventil. Hierdurch kann je nach Anforderungen etwa ein Unterdruck im Plenum erhöht werden, zum Beispiel zur Erhöhung eines stromabwärts des Ventilglieds zugeführten Abgasstroms zur Schadstoffreduzierung (insbesondere Hochdruck-Abgasrückführung). Auch in Verbindung mit einem Bypasskanal kann durch das drosselnde Ventilglied, das zum Beispiel ergänzend zu einem weiteren Ventilglied im Bypasskanal vorgesehen sein kann, eine weitergehende und insbesondere vollständige Umlenkung des Gasstroms durch den Bypasskanal bewirkt werden. In bevorzugter Detailgestaltung ist dabei das Ventilglied vor dem zweiten Kühlerabschnitt, insbesondere nach dem zweiten Kühler, insbesondere in dem Umlenkbereich, angeordnet. Der Umlenkbereich bietet einen idealen und ohnehin vorhandenen Bauraum zur Anordnung des Ventilglieds.

Allgemein hat die Erhöhung der Gasstromtemperatur durch Umgehung des Kühlglieds Vorteile gegenüber zum Beispiel einer Drosselung eines Kühlmittelstroms durch das Kühlglied, denn der Temperaturanstieg erfolgt unmittelbar und ein Sieden des Kühlmittels ist wirkungsvoll vermieden. Alternativ oder ergänzend kann aber auch eine Regelung des Kühlmittelstroms durch das Kühlglied zur Beeinflussung der Gasstromtemperatur vorgesehen sein.

Bei einer vorteilhaften Ausführungsform der Erfindung mündet eine Abgasrückführung in dem Ansaugmodul. In bevorzugter Detailgestaltung mündet die Abgasrückführung dabei zumindest teilweise in dem Umlenkbereich, insbesondere in einem ersten Zweig in dem Umlenkbereich und in einem zweiten Zweig in dem Plenumsbereich. Hierdurch kann eine Verteilung des rückgeführten Abgases auf eine gekühlte und eine ungekühlte Strecke je nach Anforderungen erfolgen. Durch ein z.B. im Umlenkbereich vorgeschaltetes Drosselglied kann die rückgeführte Abgasmenge und/oder deren Verteilung auf die Zweige beeinflusst werden. Der Abgasstrom kann über weitere Wärmetauscher bereits vorgekühlt sein und je nach Anforderungen kann auch ein zusätzliches, in dem Abgaszweig angeordnetes Stellventil vorgesehen sein.

Bei einer baulich besonders einfachen Ausgestaltung können der erste Kühlerabschnitt und der zweite Kühlerabschnitt als Abschnitte einer baulichen Einheit ausgebildet sein, die insbesondere von dem gleichen Kühlkreislauf durchströmt sind. Es kann dabei eine gasstromseitige Trennebene zwischen den Kühlern vorliegen, etwa in Form einer Kühlmittelscheibe, eines Leerrohrs oder eines Trennblechs. Auch bei Ausbildung der beiden Kühlerabschnitte als bauliche Einheit kann eine differenzierte Ausgestaltung der einzelnen Kühler vorliegen, zum Beispiel durch Verwendung unterschiedlicher Rippen-Bauformen, unterschiedlicher Ausgestaltung von eingeprägten Winglets oder Ähnlichem.

Bei einer alternativen vorteilhaften Ausführungsform sind der erste Kühlerabschnitt und der zweite Kühlerabschnitt von jeweils separaten Kühlmittelströmen durchströmt. In einer anderen Ausgestaltung ist der erste Kühlerabschnitt ein separat ausgebildeter Kühler und der zweite Kühlerabschnitt auch ein separat ausgebildeter Kühler. Hierdurch lässt sich eine weitere Optimierung der Leistung des Kühlglieds erzielen, zum Beispiel durch Vorsehen eines Hochtemperatur-Kühlkreislaufs für den ersten Kühlerabschnitt, insbesondere für den ersten Kühler, und eines Niedertemperatur-Kühlkreislaufs für den zweiten Kühlerabschnitt, insbesondere für den zweiten Kühler. Es kann auch eine Aufteilung der Wärmeströme und Reduzierung der Wärmelast im Niedertemperaturkühler (zweiten Kühlerabschnitt, insbesondere den zweiten Kühler) erreicht werden. Insbesondere der erste Kühlerabschnitt, insbesondere der erste Kühler,(Hochtemperaturkühler) kann an einen Kühlmittelkreislauf mit erhöhtem Druck und Volumenstrom angeschlossen werden. Die beiden Kühlerabschnitte, insbesondere die beiden Kühler, können insbesondere auch aus verschiedenen Materialien bestehen, wobei insbesondere der zweite Kühlerabschnitt, insbesondere der zweite Kühler, im Hinblick auf anfallendes Kondensat, insbesondere bei Abgasrückführung, in Bezug auf erhöhte Korrosionsresistenz (Stahl oder korrosionsbeständiges Aluminium), Kondensatablauf und Verschmutzungsresistenz optimiert sein kann. Abgas kann dabei zum Beispiel in den Umlenkbereich hochdruckseitig eingebracht werden, wobei ein Abgasrückführventil derart in das Ansaugsystem integriert sein kann, dass rückgeführte Abgasmengen in Umlenkbereich und Plenumsbereich und somit auch die Leistung der Abgaskühlung steuerbar sind. Auch eine genaue Temperierung des Gasstroms durch Steuerung des Kühlmittelstroms ist besonders differenziert ausführbar, etwa indem bevorzugt der Kühlmittelstrom des zweiten Kühlerabschnitts, insbesondere des zweiten Kühlers, verändert wird.

Bei einer allgemein vorteilhaften Ausgestaltung ist der Eintrittsbereich in Schwerkraftrichtung unterhalb des Plenumsbereichs angeordnet. Dies reduziert die Bauhöhe des Motors. Zudem ist hierdurch ein besonders guter Ablauf von im zweiten Kühlerabschnitt, insbesondere im zweiten Kühler, anfallendem Kondensat in den Plenumsbereich realisierbar. Allgemein vorteilhaft hat hierbei der Plenumsbereich eine in Strömungsrichtung abwärts gerichtete Neigung.

Zur optimalen Anpassung des Ansaugmoduls an typisch für Verbrennungsmotoren zur Verfügung stehende Bauräume ist es vorgesehen, dass der Umlenkbereich und das Kühlglied bezüglich der Schwerkraft im Wesentlichen nebeneinander angeordnet sind.

Je nach Anforderungen bieten sich für das Kühlglied verschiedene mögliche Bauformen an, wobei der erste Kühlerabschnitt, insbesondere der erste Kühler, und/oder der zweite Kühlerabschnitt, insbesondere der zweite Kühler, als Rohr-Rippensystem oder als Scheiben-Rippensystem oder als Rohrbündelsystem ausgebildet sind. Besonders bevorzugt ist zumindest einer der Kühlerabschnitte, insbesondere zumindest einer der Kühler, als Rohr-Rippensystem ausgeformt. Die Kühlerabschnitte, insbesondere die Kühler, können auch voneinander verschiedene Bauformen haben.

Bei einer optimierten Ausführungsform weist ein geometrischer Strömungsquerschnitt des zweiten Kühlerabschnitts, insbesondere des zweiten Kühlers, eine andere, insbesondere kleinere Größe auf als ein geometrischer Strömungsquerschnitt des ersten Kühlerabschnitts, insbesondere des ersten Kühlers. Hierbei wird dem Umstand Rechnung getragen, dass der Gasstrom durch den ersten Kühlerabschnitt, insbesondere durch den ersten Kühler, eine Abkühlung erfährt und sich eine entsprechend dem Druckabfall kleinere Querschnittsfläche des zweiten Kühlerabschnitts, insbesondere des zweiten Kühlers, anbietet. Je nach Anforderungen kann aber auch der zweite Kühlerabschnitt, insbesondere der zweite Kühler, eine größere Querschnittsfläche aufweisen, zum Beispiel wenn erhebliche Abgasmengen zwischen erstem und zweitem Kühlerabschnitt, insbesondere zwischen erstem und zweitem Kühler, zugeführt werden.

In einer vorteilhaften Weiterbildung der Erfindung erfolgt der Antrieb des zumindest einen Ventilglieds mittels eines Aktuators. Der Aktuator kann ein elektrischer Aktuator sein. In einer anderen Ausbildung der Erfindung ist der Aktuator ein pneumatischer Aktuator. In einer anderen vorteilhaften Weiterbildung ist der Aktuator besonders vorteilhaft in das Gehäuse integriert. Insbesondere weist das Gehäuse des Ansaugmoduls einen Bauraum auf, in dem der Aktuator anordenbar ist.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt eine räumliche Ansicht einer ersten Ausführungsform eines erfindungsgemäßen Ansaugmoduls.
- Fig. 2: zeigt das Ansaugmodul aus Fig. 1 in einer Draufsicht von der Seite mit durchsichtigen Gehäusewänden.
- Fig. 3: zeigt eine räumliche Ansicht des Ansaugmoduls aus Fig. 1 mit durchsichtigen Gehäusewänden.

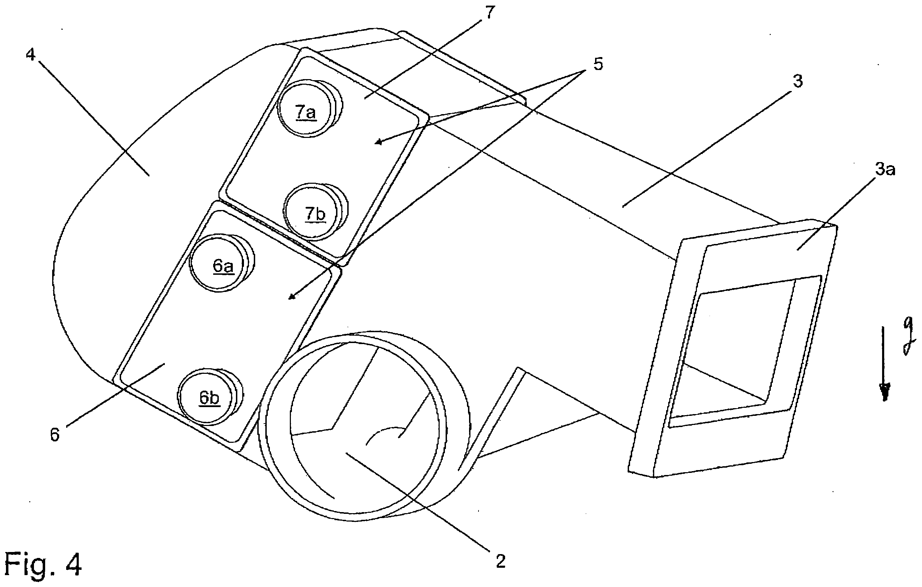

- Fig. 4: zeigt eine räumliche Ansicht einer zweiten Ausführungsform der Erfindung.
- Fig. 5a: zeigt eine räumliche Ansicht einer weiteren Ausführungsform eines erfindungsgemäßen Ansaugmoduls.
- Fig.5b: zeigt die in Fig. 5a dargestellte räumliche Ansicht des Ansaugmoduls zum Teil aufgeschnitten.
- Fig. 6: zeigt eine seitliche Draufsicht auf das Ansaugmodul aus Fig. 5a mit durchsichtigen Wänden.

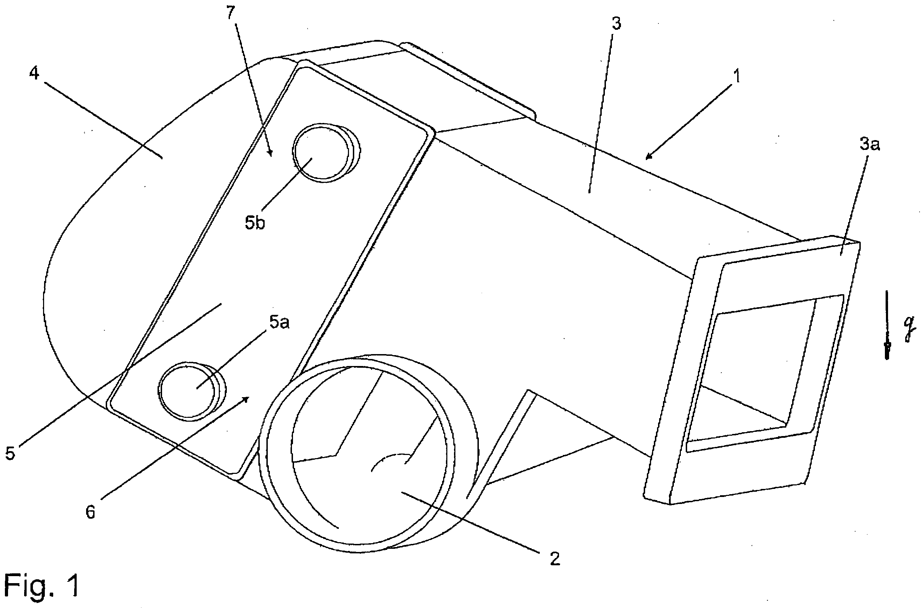

Das erste Ausführungsbeispiel nach Fig. 1 zeigt ein Ansaugmodul mit einem Gehäuse 1, das einen Eintrittsbereich 2, einen in Schwerkraftrichtung oberhalb des Eintrittsbereich angeordneten Plenumsbereich 3 und einem seitlich neben Eintrittsbereich 2 und Plenumsbereich 3 angeordneten Umlenkbereich 4. Unter dem Begriff Plenumsbereich wird der Bereich nach Art eines Ansaugkrümmers verstanden, über den der den Motor versorgende Gasstrom den zumeist mehreren Ansaugkanälen der Zylinder zugeführt wird. Der Plenumsbereich 3 umfasst einen Flansch 3a zur Anbringung an den nicht dargestellten Verbrennungsmotor. An dem Gehäuse 1 sind zudem Versteifungsrippen 1a zur mechanischen Versteifung angeordnet. Das Gehäuse besteht aus einem beliebigen geeigneten Material, wie einem Metall, z.B. Aluminium, Magnesium, Kunststoff oder ein Verbundwerkstoff aus einer Kombination beispielsweise von einem Metall und einem Kunststoff.

Insbesondere kann ein Abschnitt des Ansaugmoduls, in dem der Eintrittsbereich zum Ladelufteintritt angeordnet ist, aus einem anderen Werkstoff ausgebildet sein als der übrige Teil des Ansaugmoduls. Der Abschnitt des Eintrittsbereichs für die Ladeluft ist insbesondere temperaturbeständiger als der restliche Teil des Ansaugmoduls und insbesondere aus einem hochtemperaturbeständigen Kunststoff und/oder einem Metall ausgebildet.

Zwischen dem Umlenkbereich 4 einerseits und den übereinander angeordneten Eintritts- und Plenumsbereichen andererseits ist ein Kühlglied 5 in das Gehäuse 1 eingesetzt, dass von einem flüssigen Kühlmittel zum Beispiel eines Niedertemperatur-Kühlkreislaufs über Anschlüsse 5a, 5b durchströmbar ist. Das Kühlglied 5 erstreckt sich im Wesentlichen über die gesamte Bauhöhe des Gehäuses 1 und umfasst einen ersten, unteren Abschnitt 6 zur Ausbildung eines ersten Kühlerabschnitts bzw. eines ersten Kühlers und einem zweiten, oberen Abschnitt 7 zur Ausbildung eines zweiten Kühlerabschnitts bzw.

Kühlers. Die beiden Kühlerabschnitte 6, 7 bzw. die beiden Kühler 6, 7 sind als bezüglich des Gasstroms über ein Trennblech (nicht dargestellt) separierte Abschnitte eines baueinheitlichen Kühlers in Rohrrippen-Bauweise ausgeformt. Insbesondere kann das Kühlglied dabei als nur einreihiger Rohrrippenkühler ausgeformt sein. In einem anderen Ausführungsbeispiel ist das Kühlglied als zwei-, drei- oder mehrreihiger Rohrrippenkühler ausgebildet.

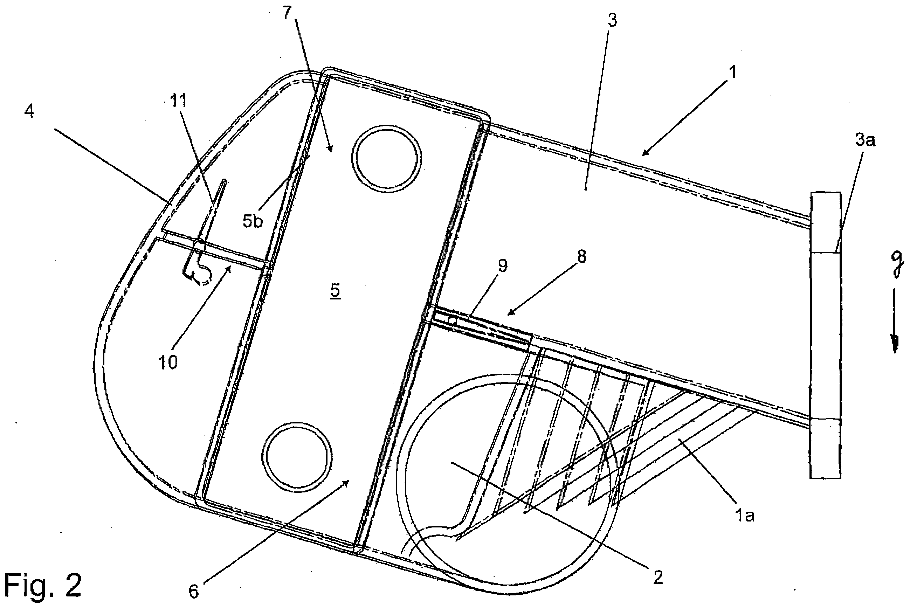

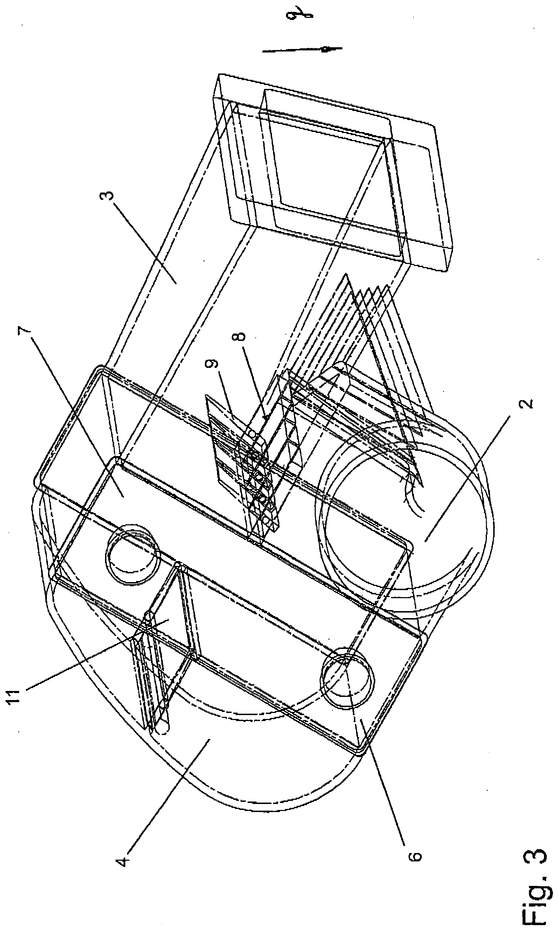

In Fig. 2 und Fig. 3 ist gezeigt, dass zwischen Eintrittsbereich 2 und Plenumsbereich 3 ein Durchlass zur Ausbildung eines Bypasskanals 8 vorgesehen ist, der von einem stellbaren ersten, als Stellklappe ausgeformten Ventilglied 9 einstellbar verschließbar ist.

In dem Umlenkbereich 4 ist zudem ein weiterer Durchlass 10 ausgebildet, der von einem zweiten als Stellklappe ausgeformten Ventilglied 11 einstellbar verschließbar ist. Das zweite Ventilglied 11 kann je nach Stellung den die Kühlerabschnitte 6, 7 bzw. Kühler 6, 7 durchströmenden Gasstrom bis zum vollständigen Verschluss drosseln.

Das Kühlglied 5 ist ungleichmäßig in die beiden Kühlerabschnitte 6, 7 bzw. Kühler 6, 7 aufgeteilt, wobei eine geometrische Querschnittsfläche des zweiten Kühlerabschnitts 7 bzw. des Kühlers 7 aufgrund des dort kühleren Gasstroms kleiner ist als die Querschnittsfläche des ersten Kühlerabschnitts 6 bzw. des Kühlers 6.

Fig. 2 zeigt die tatsächliche Einbaulage des Ansaugmoduls, wobei der Flansch 3a eine senkrecht verlaufende Querschnittsfläche aufweist. Insbesondere der Boden des Plenumsbereichs 3 ist dabei in Richtung auf den Verbrennungsmotor zu abwärts geneigt, so dass in dem zweiten Kühlerabschnitt 7 bzw. in dem zweiten Kühler in dem anfallendes Kondensat besser zu dem Verbrennungsmotor hin abgeführt wird.

Der Gasstrom zur Versorgung des Verbrennungsmotors besteht bei Eintritt in den Eintrittsbereich aus komprimierter und erhitzter Ladeluft, wobei je nach Ausgestaltung bereits rückgeführtes Abgas beigemischt sein kann. In einer Hauptbetriebsart bei geschlossenem ersten Ventilglied 9 und zumindest teilweise geöffnetem zweiten Ventilglied 10 durchströmt die Ladeluft nach Eintritt in den Eintrittsbereich zunächst den ersten Kühlerabschnitt 6 bzw. den ersten Kühler 6 und wird dabei um eine erste Temperaturdifferenz abgekühlt. Nachfolgend wird der Gasstrom in dem Umlenkbereich 4 um vorliegend 180° umgelenkt sowie durch Querströmungen homogenisiert und durchströmt dann zur weiteren Kühlung den zweiten Kühlerabschnitt 7 bzw. den zweiten Kühler 7. Nachfolgend durchläuft der Gasstrom den Plenumsbereich 3, in dem eine weitere Homogenisierung und Verteilung auf die Einlasskanäle der Zylinder des Motors erfolgt.

Bei anderen Betriebsarten ist es zum Beispiel vorgesehen, dass der Bypasskanal 8, etwa in einer Warmlaufphase des Motors, durch das Ventilglied 9 zumindest teilweise geöffnet ist. Durch zusätzliches Schließen des zweiten Ventilglieds 11 kann bei Bedarf eine vollständige Durchleitung des Gasstroms durch den Bypasskanal bewirkt werden.

Weiterhin kann es vorgesehen sein, dass eine (nicht dargestellte) Abgasrückführung in den Umlenkbereich 4 stromabwärts des zweiten Ventilglieds 11 und/oder in den Plenumsbereich 3 mündet, insbesondere auch über Teilströme in beide Bereiche. Durch Steuerung des zweiten Ventilglieds 11 als Drosselglied kann dabei die Menge des rückgeführten Abgases eingestellt werden.

Bei dem Ansaugmodul gemäß dem zweiten Ausführungsbeispiel ist als einziger Unterschied zu dem ersten Ausführungsbeispiel das Kühlglied 5 mit separaten Kühlern 6, 7 ausgebildet, die jeweils von einem ersten Kühlmittelstrom über Anschlüsse 6a, 6b und einem zweiten Kühlmittelstrom über Anschlüsse 7a, 7b durchströmbar sind. Insbesondere der zweite Kühler 7 kann dabei in seiner Leistung über eine Regelung des Kühlmittelstroms regelbar ausgelegt sein, um eine praxisgerechte Feineinstellung der Ladelufttemperatur je nach Betriebszustand zu erzielen.

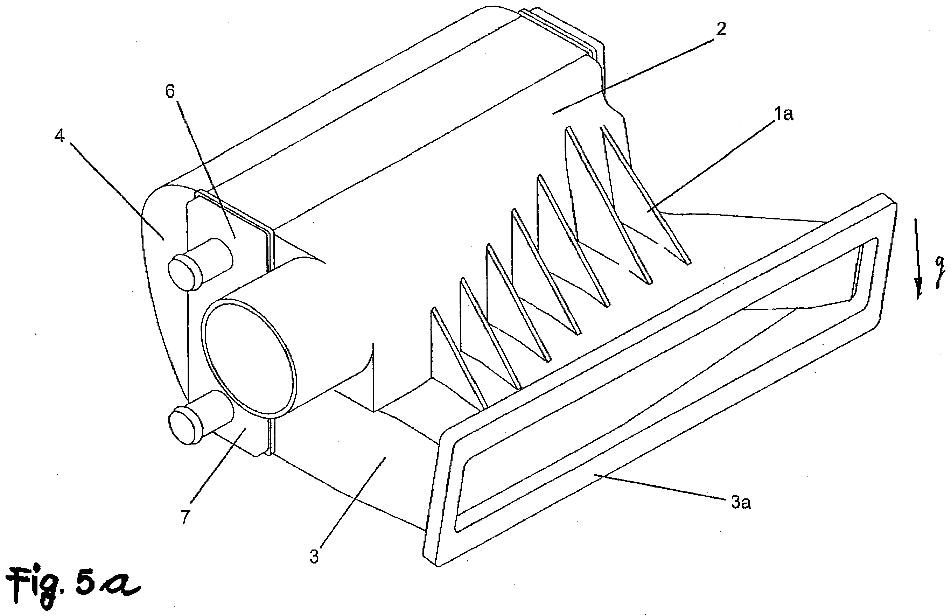

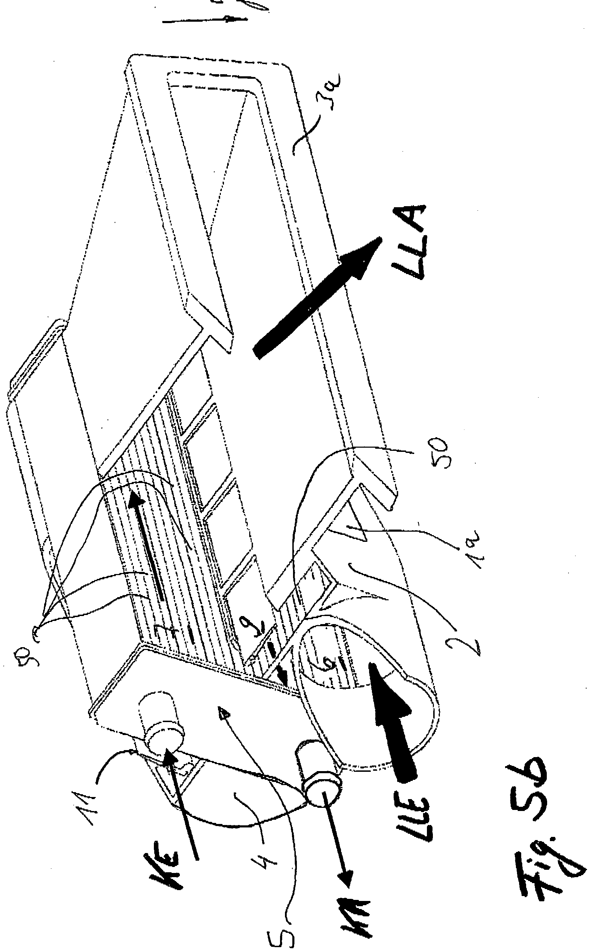

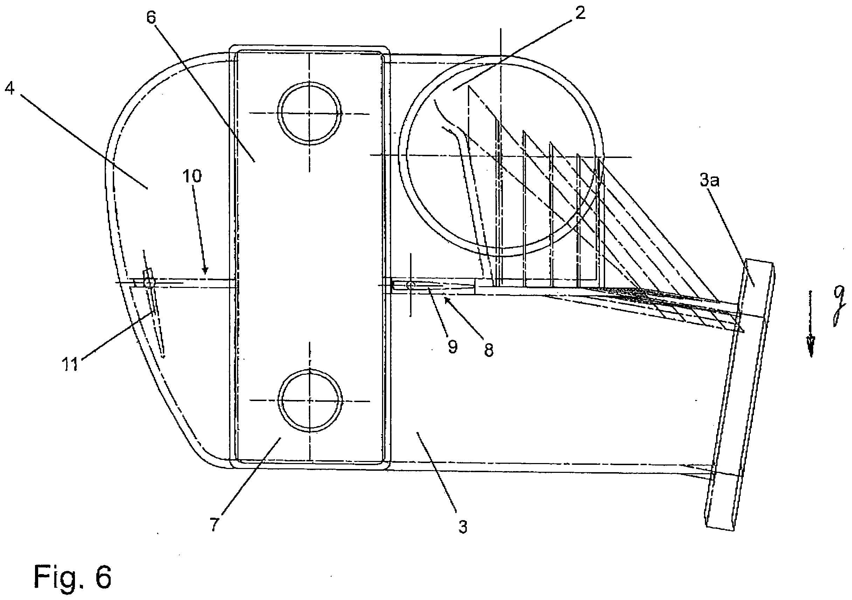

Das dritte Ausführungsbeispiel gemäß Fig. 5a, 5b und Fig. 6 unterscheidet sich von dem ersten Beispiel dadurch, dass der Eintrittsbereich 2 hier oberhalb des Plenumsbereichs 3 angeordnet ist.

**Fig.5b** zeigt die in Fig. 5a dargestellte räumliche Ansicht des Ansaugmoduls zum Teil aufgeschnitten. Für gleiche Merkmale werden die gleichen Bezugszeichen verwendet wie in den vorherigen Figuren.

Über den Ladelufteintritt LLE strömt Ladeluft oder in einer anderen Ausgestaltung der Erfindung ein Gemisch aus Ladeluft und rückgeführtem Abgas über den nicht näher bezeichneten Eintritt in das Ansaugmodul ein. Im dargestellten Fall ist das Ventilglied 9 in einer Stellung dargestellt, in der kein Bypassen der Ladeluft um den Ladeluftkühler 6,7 erfolgen kann. In einer anderen nicht dargestellten Stellung des Ventilglieds 9 kann ein Teil oder die gesamte Ladeluft bzw. in einer anderen Ausgestaltung das Gemisch aus Ladeluft und rückgeführtem Abgas ohne in dem Ladeluftkühler 6,7 gekühlt zu werden an dem Ladeluftkühler 6,7 bygepasst werden und dem Plenum im Wesentlichen direkt zugeführt werden.

In Figur 5b ist noch die Ausbildung des Kühlgliedes 5 aufweisend einen ersten Kühlerabschnitt 6 und einen zweiten Kühlerabschnitt 7 bzw. in einer anderen Ausgestaltung der Erfindung, bei der das Kühlglied einen Kühler 6 und einen davon separat ausgebildeten zweiten Kühler 7 aufweist, sichtbar dargestellt. Das Kühlglied 5 weist einen Eintrittsstutzen zum Kühlmitteleintritt KE auf, in den Kühlmittel in das Kühlglied 5 einströmt. Das Kühlglied weist eine Mehrzahl von Strömungskanälen 50 auf. Das Kühlmittel, insbesondere eine wasserhaltige Kühlflüssigkeit oder Luft, strömt in den Strömungskanälen des zweiten Kühlabschnitts 7, insbesondere des zweiten Kühlers 7, und anschließend in den Strömungskanälen 50 des ersten Kühlerabschnitts 6 bzw. des ersten Kühlers 6 zum Kühlmittelaustritt KA. Die Strömungskanäle 50 sind in der dargestellten Ausführungsform Flachrohre aus Aluminium, Edelstahl oder einem anderen Metall oder aus einem anderen wärmeleitenden Material. In einer anderen Ausgestaltung der Erfindung sind die Strömungskanäle mit einer Beschichtung versehen, die eine Korrosion der Strömungskanäle 50 verhindert.

Des Weiteren ist ein weiteres Ventilglied 11 vorgesehen. In der dargestellten Ventilstellung des Ventilgliedes 11 strömt die Ladeluft oder in einer anderen Ausgestaltung der Erfindung ein Gemisch aus Ladeluft und rückgeführtem Abgas über den Ladelufteintritt LLE in das Ansaugmodul ein, durchströmt anschließend den ersten Kühlerabschnitt 6, insbesondere den ersten Kühler 6, wird umgelenkt und durchströmt anschließend den zweiten Kühlerabschnitt 7 bzw. den zweiten Kühler 7.
Der erste Kühler 6 und/oder der zweite Kühler 7 sind insbesondere als U-Flow-Kühler ausgebildet, dabei sind insbesondere der Eintrittsstutzen und der Austrittsstutzen auf derselben Seite angeordnet.

In Fig. 6 ist ein Betriebszustand insbesondere einer Kaltstartphase dargestellt, bei dem das erste Ventilglied 9 vollständig geöffnet und das zweite Ventilglied 11 vollständig geschlossen ist, so dass der gesamt Gasstrom durch den Bypasskanal strömt.

Es versteht sich, dass die jeweiligen Merkmale der einzelnen Ausführungsbeispiele je nach Anforderungen sinnvoll miteinander kombinierbar sind.

## Patentansprüche

1. Ansaugmodul, umfassend ein Gehäuse (1),
einen Eintrittsbereich (2) und einen Plenumsbereich (3) zum Anschluss an einen Verbrennungsmotor,
wobei zwischen dem Eintrittsbereich (2) und dem Plenumsbereich (3) ein Kühlglied (5) zur Kühlung eines von dem Eintrittsbereich über den Plenumsbereich (3) zum Verbrennungsmotor geführten Gasstroms angeordnet ist, wobei das Kühlglied (5) von einem flüssigen Kühlmittel durchströmbar ist, wobei zwischen dem Eintrittsbereich (2) und dem Plenumsbereich (3) zumindest ein Bypasskanal (8) ausgebildet ist, wobei der zumindest eine Bypasskanal (8) durch zumindest ein Ventilglied (9), insbesondere durch zumindest eine Klappe oder ein anderes Regelglied, einstellbar verschließbar ist, **dadurch gekennzeichnet, dass** das Kühlglied (5) zumindest einen ersten Kühlerabschnitt (6) und zumindest einen zweiten Kühlerabschnitt (7) sowie einen bezüglich des Gasstroms zwischen den ersten und zweiten Kühlerabschnitten (6, 7) angeordneten Umlenkbereich (4) aufweist.

2. Ansaugmodul nach Anspruch 1, **dadurch gekennzeichnet, dass** der erste Kühlerabschnitt (6) und der zweite Kühlerabschnitt (7) einen einzigen Kühler bilden.

3. Ansaugmodul nach Anspruch 1, **dadurch gekennzeichnet, dass** der erste Kühlerabschnitt (6) ein erster Kühler ist und der zweite Kühlerabschnitt (7) ein vom ersten Kühler separat ausgebildeter zweiter Kühler ist.

4. Ansaugmodul nach einem der vorhergehenden Ansprüche, **dadurch gekennzeichnet, dass** ein Umlenkbereich (4) vorgesehen ist zur Umlenkung des Gases um einen Winkel α, insbesondere 40°≤α≤ im Wesentlichen 180°.

5. Ansaugmodul nach einem der vorhergehenden Ansprüche 1 bis 4, **dadurch gekennzeichnet, dass** das zumindest eine Ventilglied (9) in Strömungsrichtung des Gasstroms vor dem ersten Kühler (6) angeordnet ist.

6. Ansaugmodul nach einem der vorhergehenden Ansprüche, **dadurch gekennzeichnet, dass** nach dem ersten Kühlerabschnitt (6) ein Ventilglied (11) angeordnet ist, wobei der Gasstrom durch das Kühlglied (5) mittels des Ventilglieds (11) einstellbar drosselbar ist.

7. Ansaugmodul nach Anspruch 6, **dadurch gekennzeichnet, dass** das Ventilglied (11) vor dem zweiten Kühlerabschnitt (7), insbesondere in dem Umlenkbereich (4), angeordnet ist.

8. Ansaugmodul nach einem der vorhergehenden Ansprüche, **dadurch gekennzeichnet, dass** eine Abgasrückführung in dem Ansaugmodul mündet.

9. Ansaugmodul nach Anspruch 8, **dadurch gekennzeichnet, dass** die Abgasrückführung zumindest teilweise in den Umlenkbereich (4) mündet, insbesondere in einen ersten Zweig des Umlenkbereichs (4) oder in einen zweiten Zweig des Plenumsbereichs (3).

10. Ansaugmodul nach Anspruch 8 oder 9, **dadurch gekennzeichnet, dass** die Abgasrückführung abströmseitig des zweiten Kühlerabschnitts in den Plenumsbereich (3) mündet.

11. Ansaugmodul nach einem der vorhergehenden Ansprüche, **dadurch gekennzeichnet, dass** der erste Kühlerabschnitt (6) und der zweite Kühlerabschnitt (7) von dem gleichen Kühlkreislauf durchströmt sind.

12. Ansaugmodul nach einem der Ansprüche 1 bis 10, **dadurch gekennzeichnet, dass** der erste Kühlerabschnitt (6) und der zweite Kühlerabschnitt (7) von jeweils separaten Kühlmittelströmen durchströmt sind.

13. Ansaugmodul nach einem der vorhergehenden Ansprüche, **dadurch gekennzeichnet, dass** der Eintrittsbereich (2) in Schwerkraftrichtung im Wesentlichen unterhalb des Plenumsbereichs (3) angeordnet ist.

14. Ansaugmodul nach einem der vorhergehenden Ansprüche, **dadurch gekennzeichnet, dass** der Plenumsbereich (3) eine in Strömungsrichtung abwärts gerichtete Neigung aufweist.

## Claims

1. A suction module, comprising a housing (1), an inlet region (2) and a plenary region (3) for connecting to an internal combustion engine, wherein a cooling member (5) for cooling a gas flow guided from the inlet region via the plenary region (3) to the internal combustion engine is arranged between the inlet region (2) and the plenary region (3), wherein a liquid coolant can flow through the cooling member (5), wherein at least one bypass channel (8) is formed between the inlet region (2) and the plenary region (3), wherein the at least one bypass channel (8) can be adjustably closed by at least one valve member (9), in particular by at least one flap or another regulation member, **characterised in that** the cooling member (5) has at least one first cooler section (6) and at least one second cooler section (7) as well as a deflection region (4) arranged between the first and second cooler sections (6, 7) with regard to the gas flow.

2. The suction module as claimed in claim 1, **characterised in that** the first cooler section (6) and the second cooler section (7) form one single cooler.

3. The suction module as claimed in claim 1, **characterised in that** the first cooler section (6) is a first cooler and the second cooler section (7) is a second cooler formed separately from the first cooler.

4. The suction module as claimed in one of the preceding claims, **characterised in that** a deflection region (4) for deflecting the gas by an angle α, in particular 40°≤α≤ substantially 180°, is provided.

5. The suction module as claimed in one of the preceding claims 1 to 4, **characterised in that** the at least one valve member (9) is arranged in the flow direction of the gas flow in front of the first cooler (6).

6. The suction module as claimed in one of the preceding claims, **characterised in that** a valve member (11) is arranged behind the first cooler section (6), wherein the gas flow through the cooling member (5) can be adjustably throttled by the valve member (11).

7. The suction module as claimed in claim 6, **characterised in that** the valve member (11) is arranged in front of the second cooler section (7), in particular in the deflection region (4).

8. The suction module as claimed in one of the preceding claims, **characterised in that** an exhaust gas recirculation ends in the suction module.

9. The suction module as claimed in claim 8, **characterised in that** the exhaust gas recirculation ends at least partially in the deflection region (4), in particular in a first branch of the deflection region (4) or in a second branch of the plenary region (3).

10. The suction module as claimed in claim 8 or 9, **characterised in that** the exhaust gas recirculation ends in the plenary region (3) downstream of the second cooler section.

11. The suction module as claimed in one of the preceding claims, **characterised in that** the same cooling circuit flows through the first cooler section (6) and the second cooler section (7).

12. The suction module as claimed in one of claims 1 to 10, **characterised in that** respective separate coolant flows flow through the first cooler section (6) and the second cooler section (7).

13. The suction module as claimed in one of the preceding claims, **characterised in that** the inlet region (2) is arranged in the gravity direction substantially below the plenary region (3).

14. The suction module as claimed in one of the preceding claims, **characterised in that** the plenary region (3) has a slope which is directed downward in the flow direction.

## Revendications

1. Module d'admission comprenant un carter (1), une zone d'entrée (2) et une zone d'emmagasinage d'air (3) servant au raccordement à un moteur à combustion interne, où un élément de refroidissement (5) servant au refroidissement d'un flux de gaz guidé depuis la zone d'entrée jusqu'au moteur à combustion interne, via la zone d'emmagasinage d'air (3), est disposé entre la zone d'entrée (2) et la zone d'emmagasinage d'air (3), où l'élément de refroidissement (5) peut être traversé par un moyen de refroidissement liquide, où au moins un conduit de dérivation (8) est formé entre la zone d'entrée (2) et la zone d'emmagasinage d'air (3), où le conduit de dérivation (8) au moins au nombre de un peut être fermé de manière réglable par au moins un élément de soupape (9), en particulier par au moins un volet ou un autre élément de régulation, **caractérisé en ce que** l'élément de refroidissement (5) présente au moins une première partie de refroidisseur (6) et au moins une deuxième partie de refroidisseur (7) ainsi qu'une zone de retour de flux (4), qui concerne le flux de gaz, et disposée entre les première et deuxième parties de refroidisseur (6, 7).

2. Module d'admission selon la revendication 1, **caractérisé en ce que** la première partie de refroidisseur (6) et la deuxième partie de refroidisseur (7) forment un seul et même refroidisseur.

3. Module d'admission selon la revendication 1, **caractérisé en ce que** la première partie de refroidisseur (6) est un premier refroidisseur, et la deuxième partie de refroidisseur (7) est un deuxième refroidisseur configuré séparément du premier refroidisseur.

4. Module d'admission selon l'une quelconque des revendications précédentes, **caractérisé en ce qu'**il est prévu une zone de retour de flux (4) servant à la redirection des gaz suivant un angle α dont la valeur varie : en particulier 40° ≤ α ≤ 180° environ.

5. Module d'admission selon l'une quelconque des revendications précédentes 1 à 4, **caractérisé en ce que** l'élément de soupape (9) au moins au nombre de un est disposé, dans la direction de circulation du flux de gaz, en amont du premier refroidisseur (6).

6. Module d'admission selon l'une quelconque des revendications précédentes, **caractérisé en ce qu'**un élément de soupape (11) est disposé en aval de la première partie de refroidisseur (6), où le flux de gaz en circulation à travers l'élément de refroidissement (5) peut être réduit de manière réglable au moyen de l'élément de soupape (11).

7. Module d'admission selon la revendication 6, **caractérisé en ce que** l'élément de soupape (11) est disposé en amont de la deuxième partie de refroidisseur (7), en particulier dans la zone de retour de flux (4).

8. Module d'admission selon l'une quelconque des revendications précédentes, **caractérisé en ce qu'**un recyclage des gaz d'échappement débouche dans le module d'admission.

9. Module d'admission selon la revendication 8, **caractérisé en ce que** le recyclage des gaz d'échappement débouche au moins partiellement dans la zone de retour de flux (4), en particulier dans une première branche de la zone de retour de flux (4) ou bien dans une deuxième branche de la zone d'emmagasinage d'air (3).

10. Module d'admission selon la revendication 8 ou 9, **caractérisé en ce que** le recyclage des gaz d'échappement débouche dans la zone d'emmagasinage d'air (3) située du côté aval de la deuxième partie de refroidisseur.

11. Module d'admission selon l'une quelconque des revendications précédentes, **caractérisé en ce que** la première partie de refroidisseur (6) et la deuxième partie de refroidisseur (7) sont traversées par le même circuit de refroidissement.

12. Module d'admission selon l'une quelconque des revendications 1 à 10, **caractérisé en ce que** la première partie de refroidisseur (6) et la deuxième partie de refroidisseur (7) sont traversées par des flux du moyen de refroidissement à chaque fois séparés.

13. Module d'admission selon l'une quelconque des revendications précédentes, **caractérisé en ce que** la zone d'entrée (2) est disposée, dans le sens de la gravité, pratiquement au-dessous de la zone d'emmagasinage d'air (3).

14. Module d'admission selon l'une quelconque des revendications précédentes, **caractérisé en ce que** la zone d'emmagasinage d'air (3) présente une inclinaison dirigée vers l'aval dans la direction de circulation.
